# EUROPEAN PATENT APPLICATION

(11) **EP 1 011 245 A1**
(43) Date of publication of application: **21.06.2000**
(21) Application number: 99926926.9
(22) Date of filing: 05.07.1999
(51) Int. Cl.: H04L 29/08, H04L 27/18, H04L 27/34, H04B 14/04, H04L 1/12, H04J 1/00, H04J 11/00

(54) **TRANSMITTER AND RECEIVER AND DATA TRANSMISSION METHOD**

(30) Priority: 07.07.1998 JP 19207898
(71) Applicant: MATSUSHITA ELECTRIC INDUSTRIAL CO., LTD., Kadoma-shi, Osaka-fu, 571 (JP)
(72) Inventor: UESUGI, Mitsuru, Yokosuka-shi, Kanagawa 238-0048 (JP)
(74) Representative: Grünecker, Kinkeldey, Stockmair & Schwanhäusser Anwaltssozietät
(86) International application number: JP9903609
(87) International publication number: WO0002359

(57) **Abstract**

On a transmitting side, a coder 101 distributes transmitting signals to a plurality of hierarchies in unit of cell and carries out coding such that an error detection can be performed for each hierarchy, and stores a result to a data buffer 102, thereafter a hierarchical modulator 103 hierarchically modulates the coded signals to have a different quality of each signal, and transmits a result of the hierarchical modulation. On a receiving side, a hierarchical demodulator 123 performs hierarchical demodulation, and picks up cells for each hierarchy, and error detectors 124 and 125 perform error detection for each hierarchy, and outputs a re-transmission request signal of cells in which an error has been detected. The transmitting side retransmits only cells in which the error has been detected. This makes it possible to adaptively control a data transmission rate in accordance with a network state automatically without passing rate selective information between the transmitting side and the receiving side, and to improve transmission efficiency of data.

## Description

### Technical Field

The present invention relates to a transmitting apparatus and a receiving apparatus, which are mounted on a radio communication apparatus, for changing a data transmission rate in accordance with a network state, and relates to a data transmitting method.

### Background Art

In a radio communication system, there is a case in which a data transmission method for adaptively controlling a data transmission rate in accordance with a network state so as to increase an average transmission efficiency of data is used.

The following will explain a conventional radio communication apparatus, which adaptively controls the data transmission rate, with reference to the drawings.

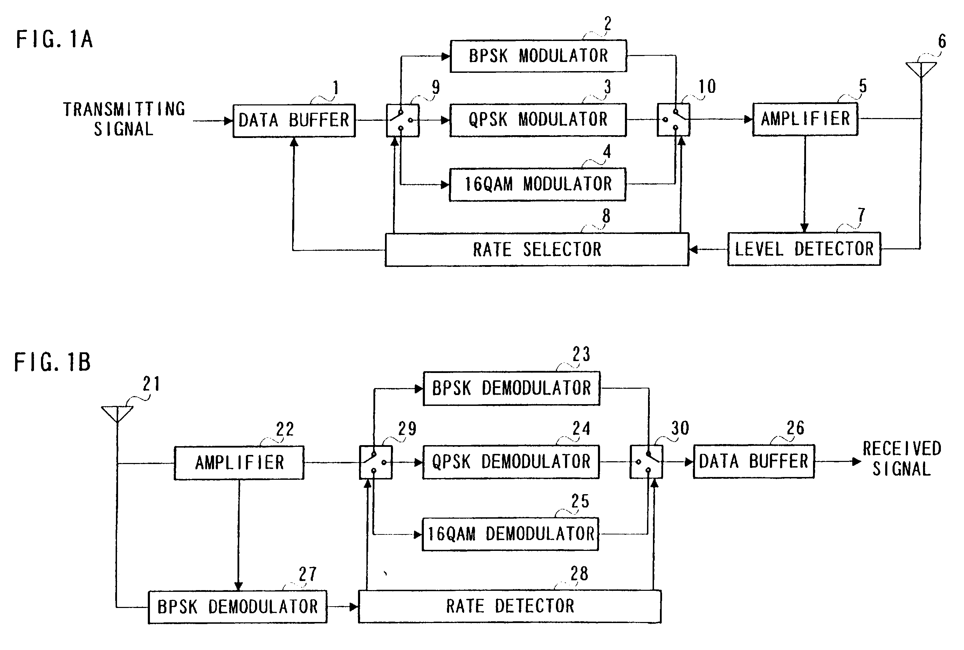

FIGS. 1A and 1B are block diagrams each showing the configuration of the conventional radio communication apparatus of a TDD transmission system. FIG. 1A is a block diagram showing the configuration of a side that adaptively controls the data transmission rate and transmits data (hereinafter referred to as "transmitting side"), and FIG. 1B is a block diagram showing the configuration of a side that receives data whose transmission rate adaptively controlled (hereinafter referred to as "receiving side").

The transmitting side of the radio communication apparatus shown in FIG. 1A comprises a data buffer 1 for temporarily storing transmitting signals, a modulator 2 for providing BPSK modulation to the transmitting signals, a modulator 3 for providing QPSK modulation to the transmitting signals, a modulator 4 for providing 16QAM modulation to the transmitting signals, an amplifier 5 for amplifying modulated signals, an antenna 6 for radio receiving and transmitting signals, a level detector 7 for detecting the levels of the signals received from the antenna 6, a rate selector 8 for selecting a data transmission rate from the level of each received signal so as to generate rate selective information, which shows a data transmission rate, and switches 9 and 10, which are switch-controlled by the rate selector 8.

The receiving side of the radio communication apparatus shown in FIG. 1B comprises an antenna 21 for radio receiving and transmitting signals, an amplifier 22 for amplifying the received signals, a demodulator 23 for providing BPSK demodulation to the received signals, a demodulator 24 for providing QPSK demodulation to the received signals, a demodulator 25 for providing 16QAM demodulation to the received signals, a data buffer 26 for storing demodulated signals, a BPSK demodulator 27 for BPSK demodulating the received signals so as to extract rate selective information, a rate detector 28 for detecting a data transmission rate from the output of the BPSK demodulator 27, and switches 29 and 30, which are switch-controlled by the rate detector 28.

In the case of TDD transmission system, since the propagation path for a reverse link is the same as for a forward link, it is possible for the transmitting side to measure the level of the received signal and to select a modulation system of the transmitting signal based on the level of the received signal.

The rate selector 8 of the transmitting side determines that the network state is good when the level of the received signal is high, and selects the modulation system of such as 16QAM, etc., in which an error occurs easily but a transmission rate is high, so as to control switches 8 and 10. Also, the rate selector 8 determines that the network state is poor when the level of the received signal is low, and selects the modulation system of such as BPSK, etc., in which a transmission rate is low but an error does not easily occurs, so as to control switches 8 and 10. Furthermore, the rate selector 8 stores rate selective information to the data buffer 1.

The transmitting signal stored in the data buffer 1 is modulated by the modulation system selected by the rate selector 8. However, the transmitting signal is always modulated by BPSK system in order that errors are not easily generated. The modulated signal is amplified by the amplifier 5, thereafter the amplified signal is radio transmitted from the antenna 6.

The signal received by the antenna 21 of the receiving side is amplified by the amplifier 22, thereafter rate selective information is extracted by BPSK( demodulator 27, and a data transmission rate is detected by the rate detector 28. Then, the switches 29 and 30 are switch-controlled based on the detected data transmission rate, and the received signal is demodulated by the demodulation system having the same data transmission rate as that of the modulation system. A demodulation result is stored in the data buffer 26 and then fetched as a received signal.

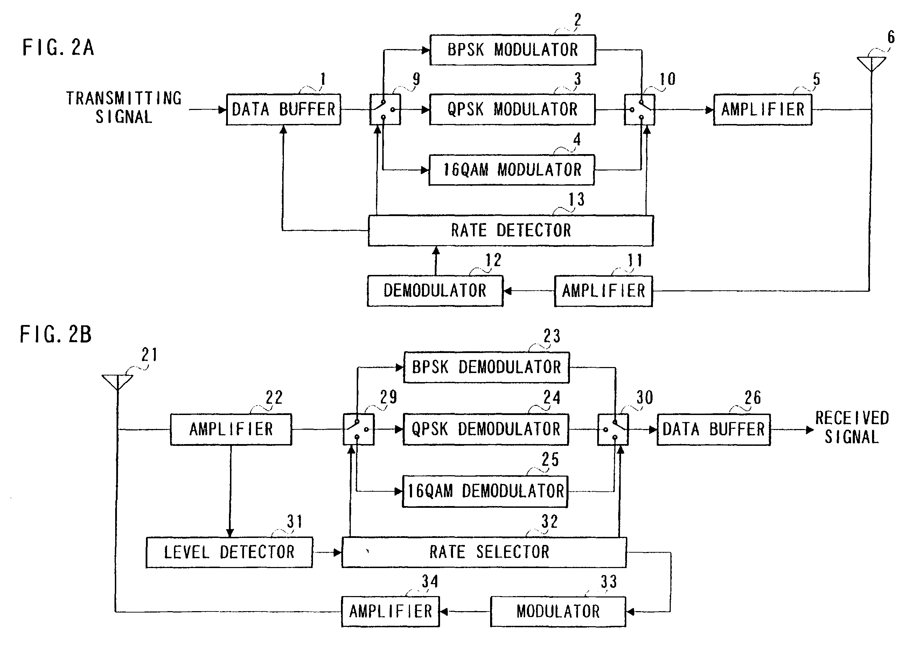

FIG. 2 is a block diagram showing the configuration of the conventional radio communication apparatus of FDD transmission system. FIG. 2A shows the configuration of the transmitting side, and FIG. 2B shows the configuration of the receiving side. In FIG. 2, the same reference numerals as those of FIG. 1 are added to the portions common to FIG. 1, and the explanation is omitted.

In the case of FDD transmission system, since the propagation path for the reverse line is different from the propagation path for the forward line, the receiving side measures the level of the received signal, and selects a modulation system of the transmitting signal based on the level of the received signal.

As compared with FIG. 1, the transmitting side of the radio communication apparatus shown in FIG.2 comprises an amplifier 11 for amplifying received signals, a demodulator 12 for extracting rate selective information from the received signals and a rate detector 13 for detecting a data transmission rate from rate selective information, in place of the level detector 7 and the rate selector 8.

Also, the receiving side comprises the level detector 31 for detecting for detecting the level of each received signal, a rate selector 32 for selecting a data transmission rate from the level of the received signal so as to generate rate selective information, which shows a data transmission rate, a modulator 33 for modulating rate selective information and an amplifier 34 for amplifying modulated rate selective information, in place of BPSK demodulator 27 and rate selector 28.

The rate selector 32 of the receiving side determines that the network state is good when the level of the received signal is high, and selects the modulation system such as 16 QAM, etc., in which an error is easily generated but a transmission rate is high, and outputs rate selective information to the modulator 33. Also, the rate selector 32 of the receiving side determines that the network state is poor when the level of the received signal is low, and selects the modulation system such as BPSK, etc., in which a transmission rate is low but an error is not easily generated, and outputs rate selective information to the modulator 33. The modulator 33 modulates the rate selective information using the BPSK system in which the error is not easily generated, and a modulated result is amplified by the amplifier 34, and then transmitted to the transmitting side from the antenna 21.

Also, the rate selector 32 outputs rate selective information, and controls the switches 29 and 30 to make preparations for performing demodulation corresponding to a specified data transmission rate at the same time. A demodulation result is stored in the data buffer 26, and then fetched as a received signal.

The signal received by the antenna 6 of the transmitting side is amplified by the amplifier 11, and then demodulated by the demodulator 12, so that rate selective information is extracted. Then, the rate detector 13 detects a data transmission rate from rate selective information and the switches 9 and 10 are controlled, so that the data transmission rate of the transmitting signal is determined.

The transmitting signal is temporarily stored in the data buffer 1, and the stored signal is modulated by any one of BPSK modulator 2, QPSK modulator 3, 16QAM modulator 4 in accordance with the control of the rate detector 13, and the modulated signal is amplified by the amplifier 5, and transmitted from the antenna 6 of the transmitting side.

Thus, the conventional radio communication apparatus, which adaptively controls the rata transmission rate, improves transmission efficiency using the modulation system with a high transmission rate when the network state is good, and transmits data without fail using the modulation system, in which a data transmission rate is low but an error is not easily generated, when the network state is poor, and this increases an average transmission efficiency of data.

However, the above conventional radio communication apparatus must pass rate selective information between the transmitting side and the receiving side, and has a problem in which transmission efficiency drops when rate selective information is in error. Also, there is a problem in which only the reception level is not adequate for determining the network state and accuracy in estimation of receiving quality worsens when multipath fading occurs. Moreover, there is a problem in which the network state at a rate selecting time and the network state at a signal transmitting time change when fading speed is high, and this prevents transmission efficiency from being sufficiently improved.

### Disclosure of Invention

An object of the present invention is to provide a transmitting apparatus and a receiving apparatus in which a data transmission rate is automatically changed in accordance with a network state without passing rate selective information, and to provide a data transmitting method.

The above object can be attached by the configuration in which a transmitting side distributes transmitting signals to a plurality of hierarchies in unit of cell and provides coding processing such that an error detection can be performed for each hierarchy and carries out hierarchical modulation so as to transmit the signals, and a receiving side demodulates received signals for each hierarchy and performs an error detection, and provides a re-transmission request to each hierarchy.

### Brief Description of Drawings

FIGS. 1A and 1B are block diagrams each showing a configuration of a conventional radio communication apparatus, which performs an adaptive modulation in TDD transmission;
FIGS. 2A and 2B are block diagrams each showing a configuration of a conventional radio communication apparatus, which performs an adaptive modulation in FDD transmission;
FIGS. 3A and 3B are block diagrams each showing a configuration of a radio communication apparatus according to Embodiment 1 of the present invention;
FIGS. 4A and 4B are schematic views each showing arrangement of signal points of hierarchical modulation in QPSK modulation;
FIGS. 5A and 5B are block diagrams each showing a configuration of a radio communication apparatus according to Embodiment 2 of the present invention;
FIGS. 6 and 7 are flowcharts showing processing actions of a transmission controller of the radio communication apparatus of Embodiment 2 of the present invention;
FIG. 8 is a schematic view showing cells to be written to TMP buffer of each hierarchy of the radio communication apparatus of Embodiment 2 of the present invention;
FIGS. 9A and 9B are block diagrams each showing a partial configuration of the radio communication apparatus of Embodiment 3 of the present invention;
FIGS. 10A and 10B are block diagrams each showing a partial configuration of the radio communication apparatus of Embodiment 4 of the present invention;
FIGS. 11A and 11B are block diagrams each showing a partial configuration of the radio communication apparatus of Embodiment 5 of the present invention; and
FIGS. 12A and 12B are block diagrams each showing a partial configuration of the radio communication apparatus of Embodiment 6 of the present invention.

### Best Mode for Carrying Out the Invention

Embodiments of the present invention will be specifically explained with reference to drawing attached therewith.

### (Embodiment 1)

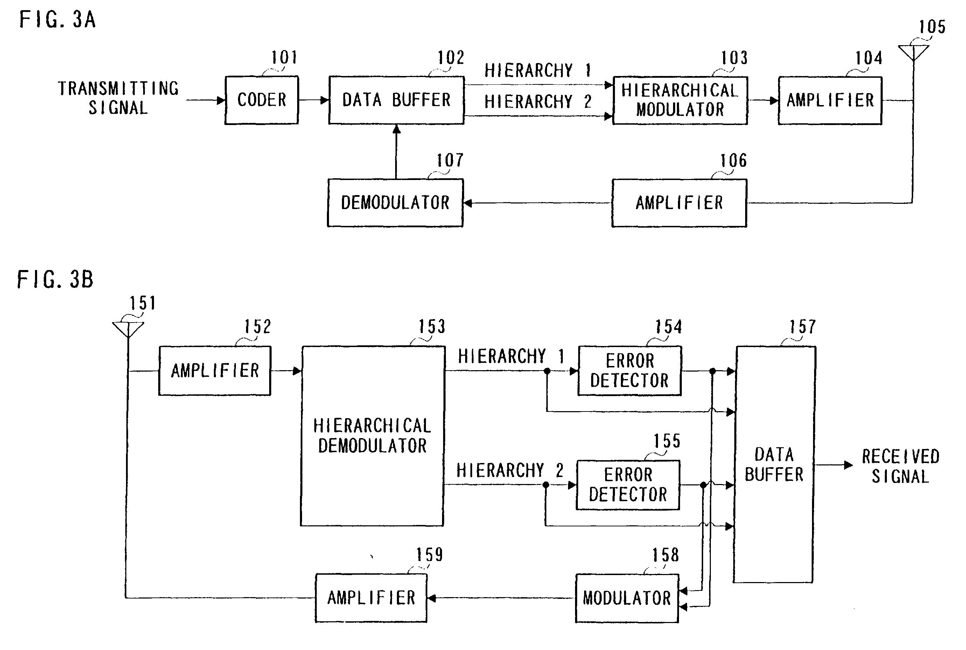

FIG. 3 is a block diagram showing the configuration of the radio communication apparatus according to Embodiment 1 of the present invention. FIG. 3A shows a side that hierarchically modulates data and transmits it (hereinafter referred to as "transmitting side"), and FIG. 3B shows a side that receives hierarchically modulated data (hereinafter referred to as "receiving side").

The transmitting side of the radio communication apparatus shown in FIG. 3A comprises a coder 101 for providing coding for an error detection to transmitting signals, a data buffer 102 for temporarily storing the coded transmitting signals, a hierarchical modulator 103 for hierarchically modulating the coded signals, an amplifier 104 for amplifying the hierarchically modulated signals, an antenna 105 for receiving and transmitting signals, an amplifier 106 for amplifying a re-transmission request signal from the receiving side, and a demodulator 107 for demodulating the re-transmission request signal.

The receiving side shown in FIG. 3B comprises an antenna 151 for receiving and transmitting signals, an amplifier 152 for amplifying received signals, a hierarchical demodulator 153 for hierarchically demodulating the received signals amplified, error detectors 154, 155 for detecting errors of the received signals, a data buffer 157 for temporarily storing the received signals, a modulator 158 for modulating a re-transmission request signal, and an amplifier 159 for amplifying the re-transmission request signal.

The coder 101 of the transmitting side distributes the transmitting signals to a plurality of hierarchies in unit of cell and performs coding such that an error detection can be carried out for each hierarchy, and stores the result to the data buffer 102. The cell distributed to each hierarchy is hierarchically modulated by the hierarchical modulator 103, and the modulation result is amplified by the amplifier 104, and the amplified result is transmitted from the antenna 105.

Here, the hierarchical modulation is a system that makes a difference in the quality between a plurality of signals transmitted on the same network by putting some contrivance of the arrangement of signal points thereby performing modulation.

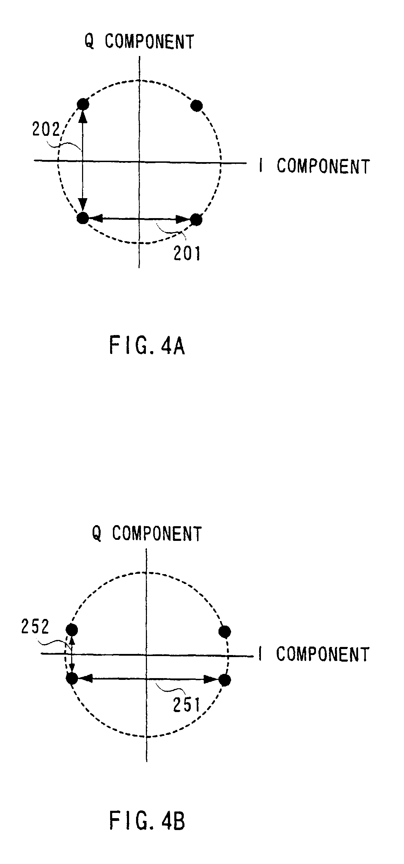

The following will explain the hierarchical modulation by use of the view showing the arrangement of signal points of QPSK modulation shown in FIG. 4. FIG. 4A shows the arrangement of signal points of general QPSK modulation. In the general QPSK modulation, since a distance 201 between signal points of I component and a distance 202 between signal points of Q component are equal to each other, the quality of I component is the same as that of Q component. FIG. 4B shows the arrangement of signal points of QPSK modulation to which hierarchical modulation is provided. In QPSK modulation to which hierarchical modulation is provided, since a distance 251 between signal points of I component is longer than a distance 252 between signal points of Q component, the quality of I component is better than that of Q component. Also, as compared with FIG. 4A, FIG. 4B shows that the quality of Q component is bad but that of I component is good.

The signal received by the antenna 151 is amplified by the amplifier 152, and the amplified signal is hierarchically demodulated by the hierarchical demodulator 153 so as to pick up the cells of the respective hierarchies. The hierarchically modulated cells are subjected to error detection processing for each hierarchy by the error detectors 154 and 155, and a re-transmission request signal relating to the cell in which an error has been detected is output. The re-transmission request signal is modulated by the modulator 158 and the modulated signal is amplified by the amplifier 159, and the amplified signal is transmitted from the antenna 151.

The re-transmission request signal transmitted from the receiving side is detected by the demodulator 107 via the antenna 105 and amplifier 106, and the detection result is output to the data buffer 102. Then, the cell, which has been requested to be re-transmitted, is automatically read from the data buffer 102 again and re-transmitted.

For example, assuming that hierarchies 1 and 2 of FIG. 3 are I component and Q component of FIG. 4B, respectively. Even in a case where the network state is bad, hierarchy 1 with high quality can succeed in data transmission, so that transmission efficiency, which corresponds to BPSK data transmission rate with one bit per one symbol, can be ensured. The cell transmitted from hierarchy 2 is re-transmitted repeatedly until hierarchy 2 succeeds in data transmission. In this case, however, if the number of re-transmissions exceeds the buffer size, the corresponding cell is discarded.

While, in a case where the network state is good, hierarchy 2 with low quality can also succeed in data transmission in addition to hierarchy 1, so that transmission efficiency, which corresponds to QPSK data transmission rate with two bits per one symbol, can be obtained.

Thus, the transmitting side distributes the transmitting signals to the plurality of hierarchies in unit of cell and provides coding processing such that error detection can be performed for each hierarchy so as to carry out hierarchical modulation, and the receiving side performs error detection for each hierarchy, and this makes it possible to adaptively control the data transmission rate automatically in accordance with the network state without passing rate selective information there between.

Though Embodiment 1 explains the case in which the number of hierarchies is two, there is no limitation in the number of hierarchies, and any number of hierarchies can be used in the present invention.

### (Embodiment 2)

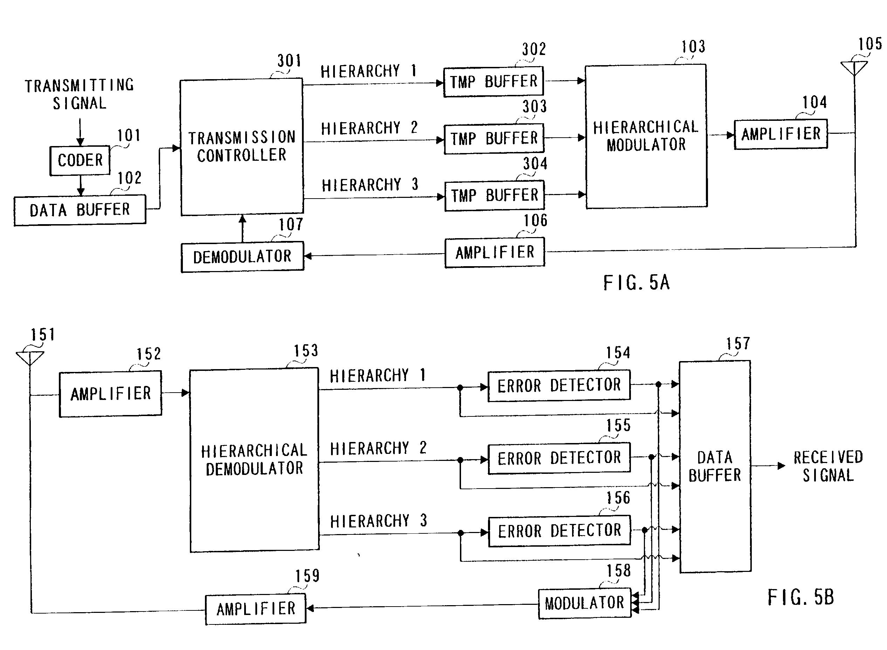

FIG. 5 is a block diagram showing the configuration of the radio communication apparatus according to Embodiment 2. FIG. 5A shows the transmitting side, and FIG. 5B shows the receiving side. In FIG. 5, the same reference numerals as those of FIG. 3 are added to the same configuration elements as those of FIG. 3, and the explanation is omitted.

As compared with FIG. 3, a transmission controller 301 for controlling the hierarchies of transmitting signals, and TMP buffers 302, 303, 304 for temporarily storing cells are added to the transmitting side of the radio communication apparatus shown in FIG. 5. Also, though FIG. 3 shows the case in which the number of hierarchies is 2 and FIG. 5 shows a case in which the number of hierarchies is 3 just for explanation, this makes no fundamental difference there between.

The transmission controller 301 controls the hierarchies of the respective cells stored in the data buffer 102, and stores them to the TMP buffers 302, 303, 304. Also, delete processing of cells, which have been written into the data buffer 102 and TMP buffers 302, 303, 304, is performed. Moreover, in a case where the re-transmission request signal is input from the demodulator 107, the corresponding cell is written into the TMP buffer, which is different from the previous one, thereby controlling the re-transmitting cell to be transmitted at the hierarchy, which is different from the previous one.

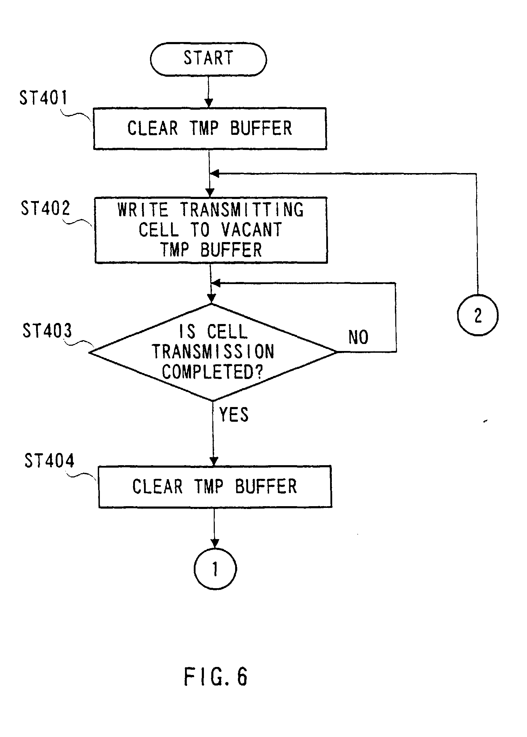

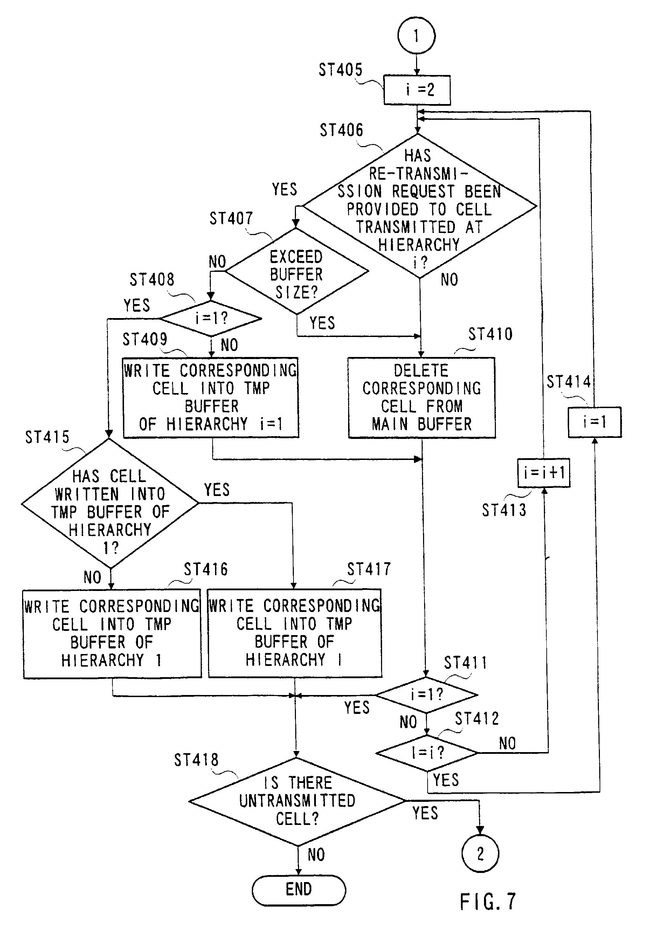

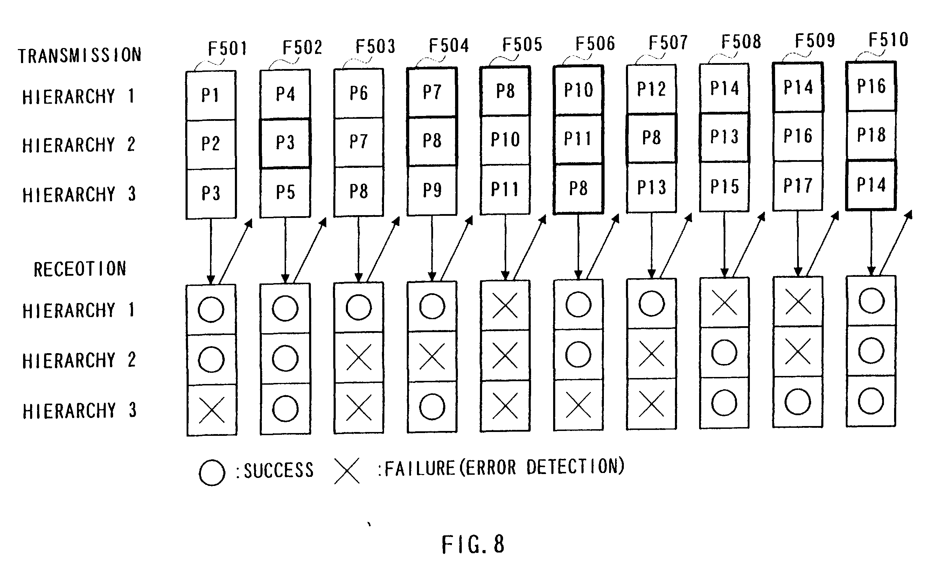

Next, an explanation is given of controlling actions of transmission controller 301 by use of flowcharts of FIGS. 6 and 7 and the schematic view of FIG. 8. In FIGS. 6 and 7, i denotes the number of hierarchies. Also, the smaller the value of i is, the better the quality of hierarchy becomes, and hierarchy 1 has the highest quality and hierarchy I has the lowest quality.

First of all, at a transmission start time, all cells written to TMP buffers 302, 303, 304, are deleted (ST401). Next, transmission cells input from the data buffer 102 are written into vacant TMP buffers 302, 303, 304 (ST402). The cells written into the respective TMP buffers are hierarchically modulated by the hierarchical modulator 103, and the amplitude thereof is amplified by the amplifier 104, and the result is radio transmitted from the antenna 105.

If the transmission of transmission cells is completed (ST403), all cells written into TMP buffers 302, 303, 304 are deleted (ST404).

Next, it is determined whether or not a re-transmission request has been provided to the cell transmitted at the hierarchy 2 from the receiving side (ST405, ST406). Then, if the re-transmission request has been provided to the corresponding cell in ST406, it is determined whether or not the number of re-transmissions of the corresponding cell exceeds the buffer size (ST407).

Then, if the number of re-transmissions of the corresponding cell does not exceed the buffer size in ST407, one rank of the hierarchy of re-transmitting cell is moved up as compared with one previously transmitted, and the corresponding cell is written to the TMP buffer (ST408, and ST409). The transmission after moving up one rank of the hierarchy of re-transmitting cell makes it possible to transmit the cell automatically during the repetition of re-transmission request at the hierarchy where errors occur least. This makes it possible to reduce the probability of the repetition of re-transmission and a cell discard rate and to increase reliability of transmission.

If the re-transmission request has not been provided to the corresponding cell in ST406 or the number of re-transmissions of the corresponding cell exceeds the buffer size in ST407, the corresponding cell is deleted from the data buffer 102 (ST410).

Then, the actions of ST406 to ST410 are repeatedly provided to the transmitted cells of the hierarchy 3 to hierarchy I (ST411, ST412, ST413).

Next, it is determined whether or not a re-transmission request has been provided to the cell transmitted at the hierarchy 1 from the receiving side (ST414, ST406). Then, if the re-transmission request has been provided thereto in ST406, it is determined whether or not the number of re-transmissions of the corresponding cell exceeds the buffer size (ST407).

Then, if the number of re-transmissions of the corresponding cell does not exceed the buffer size in ST407, it is determined whether or not the cell has been already written to the TMP buffer of hierarchy 1 (ST408, ST415).

If the cell has been already written to the TMP buffer of hierarchy 1 in ST415, the corresponding cell is written into the TMP buffer of hierarchy I (ST416).

Also, if the TMP buffer of hierarchy 1 is vacant in ST415, the corresponding cell is written into the TMP buffer of hierarchy 1 (ST417).

If no re-transmission request has been provided in ST406 or the number of re-transmissions of the corresponding cell exceeds the buffer size in ST407, the corresponding cell is deleted from the data buffer 102 (ST410).

Then, it is determined whether or not non-transmitted cell is left in the data buffer 102. Then, if non-transmitted cell is left therein, the actions from ST402 to ST417 are repeated. Moreover, if the transmission of all cells is completed, the data transmission is ended (ST418).

FIG. 8 is a schematic view showing the cells, which are written into the TMP buffers of the respective hierarchies of the radio communication apparatus according to Embodiment 2.

First of all, in F501, cells P1, P2, and P3 are written to hierarchies 1, 2, and 3, respectively.

As a result of the transmission in F501, if an error occurs in only hierarchy 3, the receiving side provides the re-transmission request of hierarchy 3 to the transmitting side. In F502, cell P3 is written into hierarchy 2 in accordance with the re-transmission request. Also, new cells P4 and P5 are written into the vacant hierarchies 1 and 3.

As a result of the transmission in F502, if all cells are received with no error by the receiving side, no re-transmission request is provided to the transmitting side. Therefore, in F503, new cells P6, P7 and P8 are written into all hierarchies.

As a result of the transmission in F503, if errors occur in both hierarchies 2 and 3, the receiving side provides the re-transmission requests of hierarchies 2 and 3 to the transmitting side. In F504, cell P7 is written into hierarchy 1 in accordance with the re-transmission request, and cell P8 is written into the hierarchy. Also, a cell P9 is written into the vacant hierarchy 3.

Here, there is a possibility that an error will occur in not the hierarchy 3 but the hierarchy 2 with good quality.

As a result of the transmission in F504, if an error occurs in only hierarchy 2, the receiving side provides the re-transmission request of hierarchy 2 to the transmitting side. In F505, cell P8 is written into hierarchy 1 in accordance with the re-transmission request. Also, new cells P10 and P11 are written into the vacant hierarchies 2 and 3.

As a result of the transmission in F505, if errors occur in all hierarchies 2, the receiving side provides the re-transmission requests of all hierarchies to the transmitting side. In F506, cell P10 is written into hierarchy 1, cell P11 is written into hierarchy 2, and cell P8 is written into hierarchy 3 in accordance with the re-transmission request.

As a result of the transmission in F506, if an error occurs in only hierarchy 3, the receiving side provides the re-transmission request of hierarchy 3 to the transmitting side. In F507, cell P8 is written into hierarchy 2 in accordance with the re-transmission request. Also, new cells P12 and P13 are written into the vacant hierarchies 1 and 3.

As a result of the transmission in F507, if errors occur in hierarchies 2 and 3, the receiving side provides the re-transmission requests of hierarchies 2 and 3 to the transmitting side. Here, cell P8 is discarded since it is delayed beyond the buffer size. Therefore, in F508, cell P13 is written into hierarchy 2 in accordance with the re-transmission request. Also, new cells P14 and P15 are written into the vacant hierarchies 1 and 3.

As a result of the transmission in F508, if an error occurs in only hierarchy 1, the receiving side provides the re-transmission request, of hierarchy 1 to the transmitting side. Here, since no error occurs in hierarchy 2, cell P14 is written into hierarchy 1 again, and new cells P16 and P17 are written into the vacant hierarchies 2 and 3 in F509.

As a result of the transmission in F509, if errors occur in hierarchies 1 and 2, the receiving side provides the re-transmission requests of hierarchies 1 and 2 to the transmitting side. Here, since the error occurs in hierarchy 2 in addition to hierarchy 1, in F510, cell P16 previously transmitted at hierarchy 2 is written into hierarchy 1, and cell P14 previously transmitted at hierarchy 1 is written into hierarchy 3. Also, new cell P18 is written into the vacant hierarchy 2.

Thus, the hierarchies are used in rotation, and the transmission is performed at the hierarchy different from the previous one at the re-transmission time. This makes it possible to automatically transmit the cell at the hierarchy with the highest quality by repeating the re-transmission even if the bad network state is continued for a long period of time, and this allows the probability of re-transmission and the cell discard rate to be reduced.

In Embodiment 2, there is no limitation in the number of hierarchies and a control algorithm. Moreover, in Embodiment 2, though the hierarchy where the cell is written is moved up one by one every re-transmission, it is possible to perform the other control such as the hierarchy where the re-transmitting cell is written is unconditionally moved up to hierarchy 1.

### (Embodiment 3)

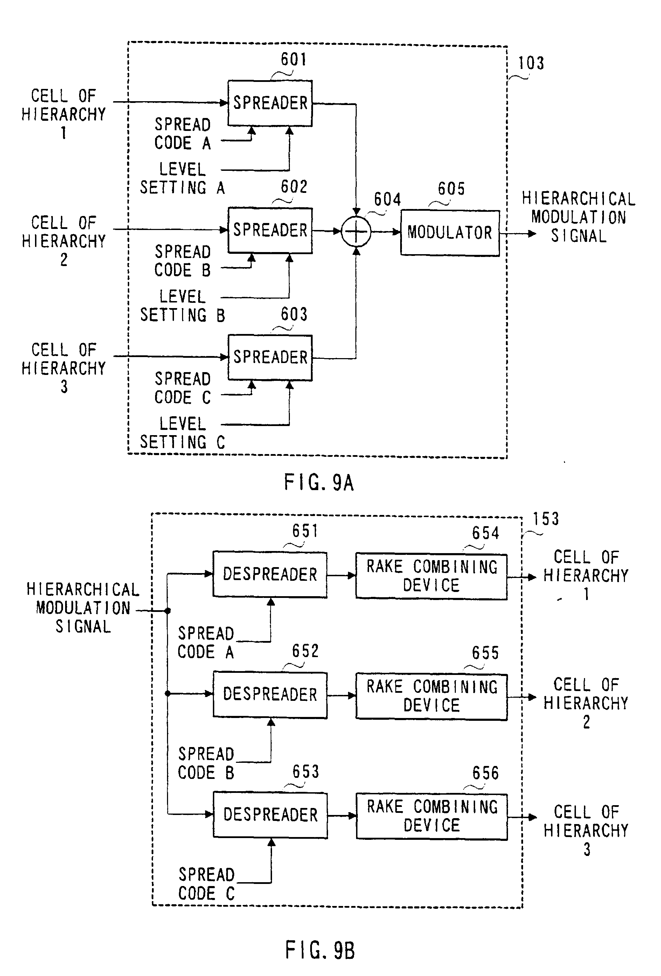

FIG. 9 is a block diagram showing the partial configuration of the radio communication apparatus according to Embodiment 3 of the present invention. FIG. 9A shows the configuration of the hierarchical modulator of the radio communication apparatus, and FIG. 9B shows the configuration of the hierarchical demodulator of the radio communication apparatus.

The hierarchical modulator 103 shown in FIG. 9A comprises a plurality of spreaders 601, 602, 603 for performing spread processing, an adder 604 for adding spread signals output from the respective spreaders, and a modulator 605 for modulating the added spread signal.

The hierarchical demodulator 123 shown in FIG. 9B comprises a plurality of despreaders 651, 652, 653 for performing despread processing, and RAKE combining devices 654, 655, 656 for RAKE combining outputs of the respective despreaders.

The spreader 601 provides spread processing to the cell distributed to hierarchy 1 using a spread code A, and amplifies a spread signal based on a level setting signal A. Similarly, the spreader 602 provides spread processing to the cell distributed to hierarchy 2 using a spread code B, and amplifies a spread signal based on a level setting signal B. Also, the spreader 603 provides spread processing to the cell distributed to hierarchy 3 using a spread code C, and amplifies a spread signal based on a level setting signal C.

Here, in order to make a difference in the quality among the hierarchies, each of the level setting signal A, level setting signal B and level setting signal C specifies a different level. The spread code A, spread code B, and spread code C have orthogonality mutually.

The spread signals output from the respective sreaders are added by the adder 604, and the added spread signal is modulated by the modulator 605, and the modulated signal is output from the hierarchical modulator 103 as a hierarchical modulated output.

The despreader 651 provides despread processing to the input signal using the same spread code A as used in the spread processing of spreader 601 so as to pick up the cell distributed to the hierarchy 1. The RAKE combining device 654 RAKE combines the cells output from the despreader 651.

Similarly, the despreader 652 provides despread processing to the input signal using the same spread code B as used in the spread processing of spreader 602 so as to pick up the cell distributed to the hierarchy 2. The RAKE combining device 655 RAKE combines the cells output from the despreader 652.

Also, the despreader 653 provides despread processing to the input signal using the same spread code C as used in the spread processing of spreader 603 so as to pick up the cell distributed to the hierarchy 3. The RAKE combining device 656 RAKE combines the cells output from the despreader 653.

This makes it possible to automatically change a data transmission rate in accordance with a network state without passing rate selective information between the transmitting side and the receiving side in the radio communication system of CDMA system.

### (Embodiment 4)

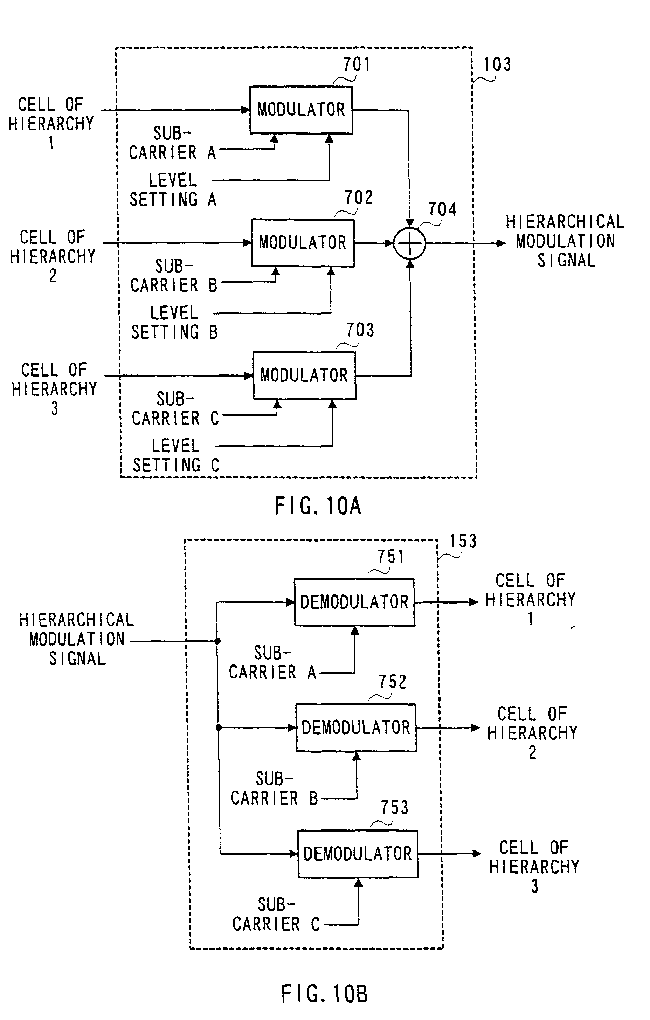

FIG. 10 is a block diagram showing the partial configuration of the radio communication apparatus according to Embodiment 4 of the present invention. FIG. 10A shows the configuration of the hierarchical modulator of the radio communication apparatus, and FIG. 10B shows the configuration of the hierarchical demodulator of the radio communication apparatus.

The hierarchical modulator 103 shown in FIG. 10A comprises a plurality of modulators 701, 702, 703 each performing modulation using a different sub-carrier, and an adder 704 for adding modulated signals output from the respective modulators.

The hierarchical demodulator 123 shown in FIG. 10B comprises a plurality of demodulator 751, 752, 753 each performing demodulation processing.

The modulator 701 provides modulation processing to the cell distributed to the hierarchy 1 using a sub-carrier A, and amplifies the modulated signal based on the level setting signal A. Similarly, the modulator 702 provides modulation processing to the cell distributed to the hierarchy 2 using a sub-carrier B, and amplifies the modulated signal based on the level setting signal B. Also, the modulator 703 provides modulation processing to the cell distributed to the hierarchy 3 using a sub-carrier C, and amplifies the modulated signal based on the level setting signal C.

Here, in order to make a difference in the quality among the hierarchies, each of the level setting signal A, level setting signal B and level setting signal C specifies a different level. In this case, to perform multi-carrier transmission, each of the sub-carrier A, sub-carrier B, and sub-carrier C specifies a different level to maintain orthogonality mutually.

The signals output from the respective modulators are added by the adder 704, and the added signal is output from the hierarchical modulator 103 as a hierarchical modulated output.

The demodulator 751 provides demodulation processing to the input signal using the same sub-carrier A as used in the modulation processing of modulator 701 so as to pick up the cell distributed to the hierarchy 1. Similarly, the demodulator 752 provides demodulation processing to the input signal using the same sub-carrier B as used in the modulation processing of modulator 702 so as to pick up the cell distributed to the hierarchy 2. Also, the demodulator 753 provides demodulation processing to the input signal using the same sub-carrier C as used in the modulation processing of modulator 703 so as to pick up the cell distributed to the hierarchy 3.

This makes it possible to automatically change a data transmission rate in accordance with a network state without passing rate selective information between the transmitting side and the receiving side in the radio communication system of multi-carrier system. Also, the provision of the orthogonal relationship to the respective frequencies makes it possible to perform radio communications in OFDM, which is one of multi-carrier system.

### (Embodiment 5)

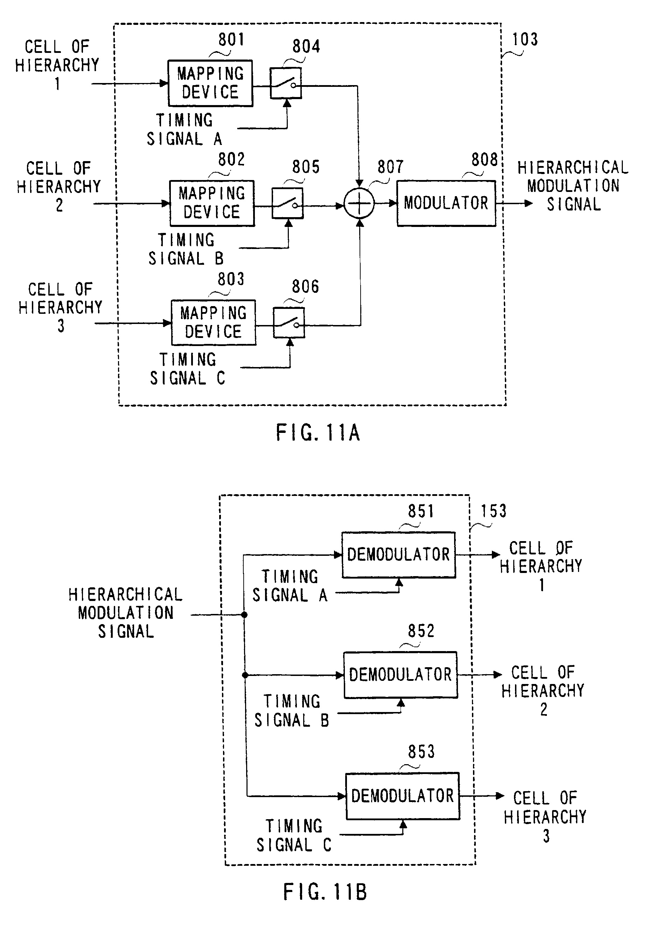

FIG. 11 is a block diagram showing the partial configuration of the radio communication apparatus according to Embodiment 5 of the present invention. FIG. 11A shows the configuration of the hierarchical modulator of the radio communication apparatus, and FIG. 11B shows the configuration of the hierarchical demodulator of the radio communication apparatus.

The hierarchical modulator 103 shown in FIG. 11A comprises a plurality of mapping devices 801, 802, 803 for each performing a different mapping processing, connection switches 804, 805, 806 for adjusting the output timing of each mapping device, an adder 807 for adding the mapped signals, and a modulator 808 for modulating the added signal.

Also, the hierarchical modulator 123 shown in FIG. 11B comprises a plurality of demodulators 851, 852, 853.

The mapping device 801 provides mapping to the cell distributed to the hierarchy 1 by use of BPSK modulation. Similarly, the mapping device 802 provides mapping to the cell distributed to the hierarchy 2 by use of QPSK modulation. Also, the mapping device 803 provides mapping to the cell distributed to the hierarchy 3 by use of sub-carrier C.

The outputs of the respective mapping devices are output to the adder 807 at a different time by the control against the connection switches 804, 805, 806 of timing signal A, timing signal B, and timing signal C, and added by the adder 807. Thereafter, the result of addition is modulated by the modulator 808, and the result of modulation is output from the hierarchical modulator 103 as a hierarchical modulated output.

Thus, the signals each having a different mapping are output at the different time, making it possible to transmit the signals each having a different quality depending on time.

The demodulator 851 provides demodulation processing to the input signal using timing signal A so as to pick up the cell distributed to the hierarchy 1. Similarly, the demodulator 852 provides demodulation processing to the input signal using timing signal B so as to pick up the cell distributed to the hierarchy 2. Also, the demodulator 853 provides demodulation processing to the input signal using timing signal C so as to pick up the cell distributed to the hierarchy 3.

This makes it possible to automatically change a data transmission rate in accordance with a network state without passing rate selective information between the transmitting side and the receiving side in the radio communication system of TDMA system.

### (Embodiment 6)

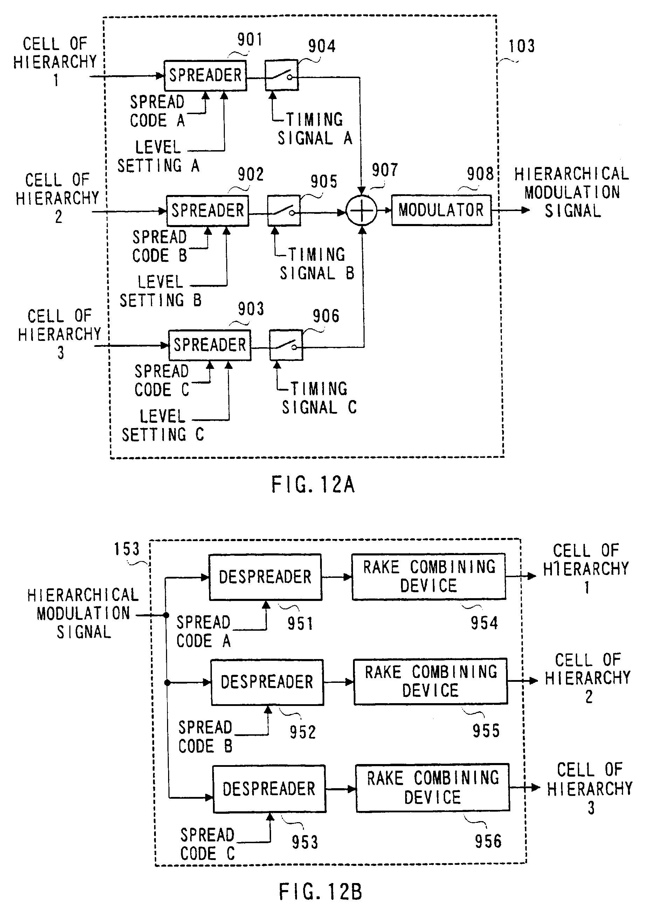

FIG. 12 is a block diagram showing the partial configuration of the radio communication apparatus according to Embodiment 6 of the present invention. FIG. 12A shows the configuration of the hierarchical modulator of the radio communication apparatus, and FIG. 12B shows the configuration of the hierarchical demodulator of the radio communication apparatus.

The hierarchical modulator 103 shown in FIG. 12A comprises a plurality of a plurality of spreaders 901, 902, 903 for performing spread processing, connection switches 904, 905, 906 for adjusting the output timing of the respective spreaders, an adder 907 for adding the respective spread signals, and a modulator 908 for modulating the added spread signal.

The hierarchical demodulator 123 shown in FIG. 12B comprises a plurality of despreaders 951, 952, 953 for performing despread processing, and RAKE combining devices 954, 955, 956 for RAKE combining outputs of the respective despreaders.

The spreader 901 provides spread processing to the cell distributed to the cell 1 using the spread code A, and amplifies the spread signal based on the level setting signal A. Similarly, the spreader 902 provides spread processing to the cell distributed to the cell 2 using the spread code B, and amplifies the spread signal based on the level setting signal B. Also, the spreader 903 provides spread processing to the cell distributed to the cell 3 using the spread code C, and amplifies the spread signal based on the level setting signal C.

Here, in order to make a difference in the quality among the hierarchies, each of the sperad code A, spread code B, spread C has a different spread rate. Also, in order to make a difference in the quality among the hierarchies, each of the level setting signal A, level setting signal B and level setting signal C may specify a different level. If all transmission levels are set to be constant, the greater the spread rate is, the better the quality of the signal becomes.

The spread signals of the respective spreaders are output to the adder at a different time by the control against the connection switches 904, 905, 906 of timing signal A, timing signal B, and timing signal C, and added by the adder 907. Thereafter, the result of addition is modulated by the modulator 908, and the result of modulation is output from the hierarchical modulator 103 as a hierarchical modulated output.

Thus, the signals each having a different spread rate are output at the different time, making it possible to transmit the signals each having a different quality depending on time.

The despreader 951 provides despread processing to the input signal using the same spread code A as used in the spread processing of spreader 901 so as to pick up the cell distributed to the hierarchy 1. The RAKE combining device 954 RAKE combines the cells output from the despreader 951. Similarly, the despreader 952 provides despread processing to the input signal using the same spread code B as used in the spread processing of spreader 902 so as to pick up the cell distributed to the hierarchy 2. The RAKE combining device 955 RAKE combines the cells output from the despreader 952. Also, the despreader 953 provides despread processing to the input signal using the same spread code C as used in the spread processing of spreader 903 so as to pick up the cell distributed to the hierarchy 3. The RAKE combining device 956 RAKE combines the cells output from the despreader 953.

This makes it possible to automatically change a data transmission rate in accordance with a network state without passing rate selective information between the transmitting side and the receiving side in the radio communication system of CDMA system.

### Industrial Applicability

As mentioned above, according to the transmitting apparatus of the present invention, the receiving apparatus thereof, and the data transmitting method thereof, a transmitting side distributes transmitting signals to a plurality of hierarchies in unit of cell and provides coding processing so that error detection can be performed for each hierarchy and carries out hierarchical modulation so as to transmit the signals, and a receiving side performs demodulation for each hierarchy and carries out an error detection, and provides a re-transmission request to each hierarchy, thereby making it possible to automatically change a data transmission rate in accordance with the network state without passing rate selective information between the apparatuses. This makes it possible to prevent an erroneous operation from being caused by an error of control signal, and to deal with a case of high speed fading time, and this eliminates the need for considering the accuracy in estimation of reception quality.

This application is based on the Japanese Patent Application No. Hei 10-192078 filed on July 7, 1998, entire content of which is expressly incorporated by reference herein.

## Claims

1. A transmitting apparatus comprising:
coding means for distributing transmitting signals to a plurality of hierarchies in unit of cell to perform coding for an error detection every hierarchy;
transmit controlling means for storing coded cells and for outputting new cells when no re-transmission request has been provided, and for re-outputting the corresponding cells when the re-transmission request has been provided; and
hierarchically modulating means for providing hierarchical modulation to the cells output from said transmit controlling means.

2. The transmitting apparatus according to claim 1, further comprising:
a first buffer for storing the coded cells;
hierarchically controlling means for controlling the hierarchies of cells written into said first buffer; and
a second buffer for storing cells controlled by said hierarchically controlling means for each hierarchy.

3. The transmitting apparatus according to claim 2, wherein said hierarchically controlling means re-outputs the cells to which the re-transmission request has been provided at a hierarchy different from the previous one.

4. The transmitting apparatus according to claim 1, wherein said hierarchically controlling means comprises spreading means for providing spreading to the cells using different codes for each hierarchy, and transmitting outputs at different transmission levels, adding means for adding the outputs of said spreading means, and modulating means for modulating an output of said adding means.

5. The transmitting apparatus according to claim 4, wherein said spreading means provides spreading to the cells using codes at a spread rates each different depending on each hierarchy, and transmits the outputs at different timing.

6. The transmitting apparatus according to claim 1, wherein said hierarchically controlling means comprises carrier modulating means for modulating carriers at different frequencies for each hierarchy, and transmitting outputs at different transmission levels, adding means for adding the outputs of said carrier modulating means.

7. The transmitting apparatus according to claim 6, wherein said carrier modulating means modulates the carriers such that the respective frequencies have orthogonal relationship.

8. The transmitting apparatus according to claim 1, wherein said hierarchically controlling means comprises mapping processing for each hierarchy and for transmitting outputs at different timing, adding means for adding the outputs of said mapping processing, and modulating means for modulating the output of said adding means.

9. A receiving apparatus comprising:
hierarchically demodulating means for demodulating signals hierarchically modulated and transmitted from a communication counterpart, and for picking up cells of the respective hierarchies;
error detecting means for performing error detection of cells for each hierarchy; and
re-transmission request transmitting means for transmitting a re-transmission request of the cell in which an error has been detected.

10. The receiving apparatus according to claim 9, wherein said hierarchically demodulating means comprises despreading means for performing despreading using the same codes as used in spreading processing of the communication counterpart so as to pick up cells of the respective hierarchies, and RAKE combining means for RAKE combining the cells of the respective hierarchies.

11. The receiving apparatus according to claim 9, wherein said hierarchically demodulating means comprises demodulating means for providing demodulation at the same frequency as used in modulation processing of the communication counterpart so as to pick up the cells of the respective hierarchies.

12. The receiving apparatus according to claim 9, wherein said hierarchically demodulating means comprises demodulating means for providing demodulation at the same timing as used in mapping processing of the communication counterpart so as to pick up the cells of the respective hierarchies.

13. A communication terminal apparatus, which mounts a transmitting apparatus thereon, for performing radio communications, said transmitting apparatus comprising:
coding means for distributing transmitting signals to a plurality of hierarchies in unit of cell to perform coding for an error detection every hierarchy;
transmit controlling means for storing coded cells and for outputting new cells when no re-transmission request has been provided, and for re-outputting the corresponding cells when the re-transmission request has been provided; and
hierarchically modulating means for providing hierarchical modulation to the cells output from said transmit controlling means.

14. A base station apparatus, which mounts a receiving apparatus thereon, for performing radio communications with the communication terminal apparatus described in claim 13, said receiving apparatus comprising:
hierarchically demodulating means for demodulating signals hierarchically modulated and transmitted from a communication counterpart, and for picking up cells of the respective hierarchies;
error detecting means for performing error detection of cells for each hierarchy; and
re-transmission request transmitting means for transmitting a re-transmission request of the cell in which an error has been detected.

15. A base station apparatus, which mounts a transmitting apparatus thereon, for performing radio communications, said transmitting apparatus comprising:
coding means for distributing transmitting signals to a plurality of hierarchies in unit of cell to perform coding for an error detection every each hierarchy;
transmit controlling means for storing coded cells and for outputting new cells when no re-transmission request has been provided, and for re-outputting the corresponding cells when the re-transmission request has been provided; and
hierarchically modulating means for providing hierarchical modulation to the cells output from said transmit controlling means.

16. A communication terminal apparatus, which mounts a receiving apparatus thereon, for performing radio communications with the base station apparatus described in claim 15, said receiving apparatus comprising:
hierarchically demodulating means for demodulating signals hierarchically modulated and transmitted from a communication counterpart, and for picking up cells of the respective hierarchies;
error detecting means for performing error detection of cells for each hierarchy; and
re-transmission request transmitting means for transmitting a re-transmission request of the cell in which an error has been detected.

17. A data transmitting method wherein a transmitting side distributes transmitting signals to a plurality of hierarchies in unit of cell and carries out coding for an error detection every each hierarchy, and provides hierarchical modulation to coded cells, and a receiving side demodulates hierarchically modulated signals, picks up cells of the respective hierarchies, and performs an error detection of cells for each hierarchy.

18. The data transmitting method according to claim 17, wherein said receiving side transmits a re-transmission request signal of cells in which an error has been detected, and said transmitting side outputs a new cell when no re-transmission request has not been provided, and re-outputs the corresponding cell when said re-transmission request has been provided.

19. The data transmitting method according to claim 17, wherein the cell to which a re-transmission request has been provided is re-output at a hierarchy different from the previous one.
